(19) **Europäisches Patentamt / European Patent Office / Office européen des brevets**

(11) **EP 4 266 406 A1**

(12) **EUROPEAN PATENT APPLICATION**
published in accordance with Art. 153(4) EPC

(43) Date of publication:
**25.10.2023 Bulletin 2023/43**

(21) Application number: **21907177.6**

(22) Date of filing: **17.12.2021**

(51) International Patent Classification (IPC):
$H01M\ 4/36^{(2006.01)}$     $H01M\ 4/587^{(2010.01)}$
$H01M\ 4/62^{(2006.01)}$     $H01M\ 4/38^{(2006.01)}$
$H01M\ 10/052^{(2010.01)}$

(52) Cooperative Patent Classification (CPC):
H01M 4/36; H01M 4/38; H01M 4/587; H01M 4/62;
H01M 10/052

(86) International application number:
**PCT/KR2021/019339**

(87) International publication number:
**WO 2022/131873 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2020 KR 20200179044**

(71) Applicants:
• **POSCO Holdings Inc.**
**Seoul 06194 (KR)**
• **RESEARCH INSTITUTE OF INDUSTRIAL SCIENCE & TECHNOLOGY**
**Pohang-si, Gyeongsangbuk-do 37673 (KR)**

(72) Inventors:
• **CHO, Moonkyu**
**Pohang-si, Gyeongsangbuk-do 37671 (KR)**
• **KIM, Yong Jung**
**Pohang-si, Gyeongsangbuk-do 37671 (KR)**
• **WOO, Jung Gyu**
**Pohang-si, Gyeongsangbuk-do 37671 (KR)**
• **YOU, Seung Jae**
**Pohang-si, Gyeongsangbuk-do 37655 (KR)**
• **PARK, Sun Jong**
**Pohang-si, Gyeongsangbuk-do 37655 (KR)**
• **KANG, Eun-Tae**
**Pohang-si, Gyeongsangbuk-do 37681 (KR)**

(74) Representative: **Potter Clarkson**
**Chapel Quarter**
**Mount Street**
**Nottingham NG1 6HQ (GB)**

(54) **METAL-CARBON COMPOSITE ANODE MATERIAL FOR LITHIUM SECONDARY BATTERY, METHOD FOR MANUFACTURING SAME, AND LITHIUM SECONDARY BATTERY COMPRISING SAME**

(57) The present disclosure includes a negative active material manufacturing method for lithium secondary battery, comprising:
grinding the metal-based material into metal-based material nanoparticles through a grinding process; obtaining spherical particles by spheronizing the pulverized metal-based material nanoparticle, a conductive material, and a conductive additive together; obtaining a composite by complexing the spherical particles with an amorphous carbon-based precursor material; and carbonizing the composite; the conductive additive is a carbon nanotube; a content of the carbon nanotube is 0.2 to 2.3 wt% compared to the metal-based material nanoparticle in the composite, a negative active material according to the method, and a secondary battery including the same.

【FIG. 1】

EP 4 266 406 A1

**Description**

**Field of the Invention**

The present exemplary embodiments relate to a negative electrode active material for a lithium secondary battery, a method for preparing the same, and a lithium secondary battery comprising the same. Specifically, the present invention relates to a metal-carbon-based composite negative active material and a manufacturing method thereof and a secondary battery including the same.

**Description of the Related Art**

Lithium ion batteries are secondary battery systems currently most widely used in mobile electronic communication devices, electric vehicles, and energy storage devices. Such lithium ion batteries have attracted attention due to advantages such as a high energy density and operating voltage and a relatively small self-discharge rate as compared with commercial aqueous secondary batteries (Ni-Cd, Ni-MH, etc.). However, when considering a more efficient use time in mobile devices improvement of energy characteristics in electric vehicles, and the like, improvement in electrochemical characteristics still remains as technical problems to be solved. For this reason, a lot of research and development has been currently conducted over four raw materials such as a positive electrode, a negative electrode, an electrolyte, and a separator.

A graphite-based material exhibiting excellent capacity retention characteristics and efficiency has been commercially available for the negative electrode among these raw materials. However, a relatively low theoretical capacity value (LiC6: 372 mAh/g) and a low discharge capacity ratio of the graphite-based material are somewhat insufficient to meet high energy and high power density characteristics of batteries required by the market. Accordingly, many researchers have been interested in group IV elements (Si, Ge, and Sn) on the periodic table. Among the group IV elements, Si has attracted attention as a very attractive material due to a very high theoretical capacity (Li15Si4: 3600 mAh/g) and low operating voltage (~0.1V vs. Li/Li+) characteristics. However, in the case of general metal-based negative electrode materials, there is a drawback that it is difficult to apply to actual batteries because they show a large volume change and low discharge capacity ratio characteristics compared to conventional graphite negative electrode materials.

Recently, it is being actively conducted research on a metal-carbon-based composite negative electrode material (composite, metal in a carbon template) that improves reversibility by combining a metal (eg silicon) capable of reacting electrochemically with lithium and a conductive material (eg graphite or carbon). In the case of these composites, there is a problem in controlling the expansion of the metal system and realizing a long cycle-life, and it is required to research on this.

**SUMMARY OF THE INVENTION**

The present invention provides a metal-carbon composite negative active material, in which a conductive additive is additionally included in the composition of the existing metal-carbon composite negative active material including metal particles, amorphous carbon-based material and conductive material. Accordingly, it is intended to improve high efficiency, long cycle-life and low expansion characteristics. In addition, it is intended to provide a manufacturing method thereof and a secondary battery including the same.

One aspect of the present invention provides a negative active material for lithium secondary battery, comprising: a carbon-based matrix; and a composite comprising a metal-based material nanoparticle supported in the carbon-based matrix,@@@wherein, a conductive material and a conductive additive are further comprised in the composite; the conductive material is flaky graphite; the conductive additive is a carbon nanotube; and a content of the carbon nanotube is 0.2 to 2.3 wt% compared to the metal-based material nanoparticle in the composite.

The metal-based material nanoparticle is derived from one selected from the group consisting of silicon, tin and aluminum.

The metal-based material nanoparticle is a pulverized metal-based material nanoparticle.

The pulverized metal-based material nanoparticle has a particle size D50 of 30 to 200 nm, and an aspect ratio of 90 wt% or more of the entire weight of the pulverized metal-based material nanoparticle is greater than 1.5.

The particle size D50 of the conductive material is 3 to 12 μm.

Another aspect of the present invention provides a negative active material manufacturing method for lithium secondary battery, comprising:

grinding the metal-based material into metal-based material nanoparticles through a grinding process; obtaining spherical particles by spheronizing the pulverized metal-based material nanoparticle, a conductive material, and a conductive additive together; obtaining a composite by complexing the spherical particles with an amorphous carbon-based precursor material; and carbonizing the composite; wherein the conductive material is flaky graphite, the conductive additive is a carbon nanotube; a content of the carbon nanotube is 0.2 to 2.3 wt% compared to the metal-based material nanoparticle in the composite.

The step of obtaining a complex is a step of mixing and binding the spherical particles and the amorphous carbon-based precursor material by dry method or wet method.

The amorphous carbon-based precursor material includes one selected from the group consisting of coal-based pitch, petroleum-based pitch and a combination thereof.

The amorphous carbon-based precursor material has 50 to 85 wt% fixed carbon and a softening point less than 300°C.

The metal-based material is one selected from the group consisting of silicon, tin and aluminum.

The metal-based material nanoparticle is a pulverized metal-based material nanoparticle.

The pulverized metal-based material nanoparticle has a particle size D50 of 30 to 200 nm, and an aspect ratio of 90 wt% or more of the entire weight of the pulverized metal-based material nanoparticle is greater than 1.5.

The particle size D50 of the conductive material is 3 to 12 $\mu$m.

The step of carbonizing the composite is a step of carbonizing for 0.5 to 2 hours at a temperature of 800 to 1000 °C.

Another aspect of the present invention provides a lithium secondary battery comprising: a positive electrode; a negative electrode; and electrolyte; the negative electrode is any one of the present embodiments.

In the present invention, when manufacturing a metal-carbon composite including a metal particle, an amorphous carbon-based material, and a conductive material, a carbon nanotube as a conductive material may be additionally included. This solves the initial efficiency, long cycle-life, and expansion control problems compared to a single conductive material.

## BRIEF DESCRIPTION OF THE DRAWINGS

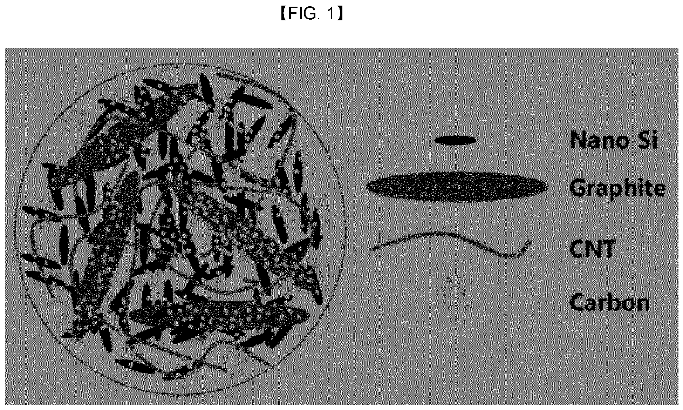

FIG. 1 shows a schematic diagram of a metal-carbon composite.

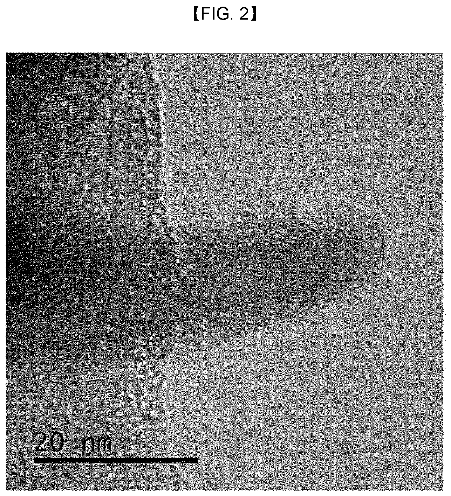

FIG. 2 shows a TEM image of carbon nanotubes in the negative active material.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including, comprising" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

In addition, unless otherwise noted, % means wt%, and 1 ppm is 0.0001 wt%.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

Hereinafter, an exemplary embodiment will be described in detail so that a person of an ordinary skill can easily practice it in the technical field to which the present invention belongs. As those skilled in the art would realize, the described embodiments may be modified in various different ways, all without departing from the spirit or scope of the present invention.

Hereinafter, each step will be described in detail.

A negative active material manufacturing method for lithium secondary battery according to one aspect of the present invention comprises:

grinding the metal-based material into metal-based material nanoparticles through a grinding process; obtaining spherical particles by spheronizing the pulverized metal-based material nanoparticle, a conductive material, and a conductive additive together; obtaining a composite by complexing the spherical particles with an amorphous carbon-based precursor material; and carbonizing the composite; wherein the conductive material is flaky graphite, the conductive additive is a carbon nanotube.

Grinding the metal-based material into metal-based material nanoparticles; is a step of obtaining nano-sized metal-based material particles in a top-down method of milling large metal-based material particles. The step of milling large metal-based material particles to obtain metal-based material nanoparticles, specifically, pulverized metal-based material nanoparticles, may be performed in a wet process. In this process, oxidation can be achieved at 1 to 10 wt% on the nanoparticle surface of the pulverized metal-based material by moisture and heat in the wet pulverization solution. And the metal-based material can react electrochemically with lithium.

The step of obtaining spherical particles; may be carried out in such a way that a wet spray drying process is performed after uniformly dry mixing and dispersing the pulverized metal-based material nanoparticle, a conductive material, and a conductive additive together.

Obtaining a composite; may be a step of obtaining a metal- carbon-based composite by mixing the spherical particles with an amorphous carbon-based precursor material and densely combining them by applying shear force.

Obtaining a composite; may be carried out by dry method or wet method. Specifically, it can be mixed and compounded by one or more selected methods from the group consisting of Planetary Mixer, 3D-Mixer, V-Mixer, Mechano-Fusion, Hybridizer, Nobilta, Homo Mixer, Henschel Mixer, Inline Mixer, and Spray Dryer.

Specifically, through the complexing step, a negative active material can be obtained by attaching and binding spherical particles including metal-based material nanoparticles to an amorphous carbon-based precursor material and then carbonizing the particles. When applied to batteries, metal-based material nanoparticles can maintain electrical contact with other materials despite volume expansion and contraction caused by cycling. That is, the amorphous carbon-based raw material can control the expansion of metal-based material nanoparticles.

Carbonizing the composite; is a step of carbonizing the composite in an inert atmosphere at a temperature of 800 to 1000 °C for 0.5 to 2 hours. Specifically, the reason for performing the heat treatment under the condition is to prevent oxidation of the metal-based material nanoparticle and to remove the volatile component (VM) of the amorphous carbon-based precursor material. Through this, it can be converted into a higher quality amorphous carbon-based material. Simultaneously, through the spray drying process of the spheronization step, the fixed carbon of the amorphous carbon-based material can be immersed closely into the particle composed of metal-based material nanoparticle and conductive material. By carbonizing the composite, the fixed carbon of the amorphous carbon-based material from which volatile matter (VM) is removed forms a matrix that supports the inside and outside of the spherical particles and maintains the conductivity.

Before carbonizing the composite, a step of shaping the composite may be further included. Preferably, a step of obtaining a molded body obtained by press-molding the composite may be further included. That is, the step of carbonizing the composite may be a step of carbonizing a molded body obtained by press-molding the composite.

After carbonizing the composite, a step of pulverizing and classifying the carbonized molded body may be further included. Preferably, it may be a step of pulverizing and classifying the carbonized molded body so that the D50 is 9 to 15 $\mu$m.

A line contact (1-dimension) function can be imparted by further including a conductive additive in the composite of the amorphous carbon-based precursor material, the metal-based material nanoparticle and the conductive material. Silicon in a lithium secondary battery exhibits expansion and contraction behavior while repeatedly being charged and discharged electrochemically. At this time, a contact between nanoparticles can be maintained by the line contact function of the conductive additive.

In addition, by further including a conductive additive, the conductive role in the composite can be complemented with the conductive material. Also, expansion suppression and cycle-life characteristics can be improved by increasing the reversibility of the complex.

The amorphous carbon-based precursor material may include one selected from the group consisting of coal-based pitch, petroleum-based pitch, and a combination thereof. In the case of using an amorphous carbon-based precursor material, it can serve as a matrix of a metal-carbon-based composite that enhances structural stability after being carbonized through heat treatment.

The amorphous carbon-based precursor material may have a fixed carbon content of 50 to 85 wt% and a softening point of less than 300°C. Specifically, the fixed carbon may be 65 to 80 wt%, and the softening point may be 100 to 270 ° C. In the amorphous carbon-based precursor material that satisfies this characteristic, low molecules such as VM are volatilized and removed in the carbonization step, and after carbonization, it is become a carbon with more than 95% of the fixed carbon. This amorphous carbon-based matrix can prevent the structure of the metal-carbon composite of the negative active material from collapsing even if the lithium secondary battery's charge and discharge cycles are repeated. In addition, as the fixed carbon value of the amorphous carbon-based matrix increases, capacity and efficiency can be increased by generating Si and conductive paths with low self-conductivity. In addition, when the fixed carbon value satisfies the range, pores inside the negative active material of the present exemplary embodiment may be reduced. As a result, the side reaction with the electrolyte solution can also be reduced, which can contribute to the increase in the initial efficiency of the battery.

The metal-based material may be one selected from the group consisting of silicon, tin and aluminum. Preferably, it may be silicone. As mentioned above, metal-based material nanoparticles can be obtained by obtaining nano-sized metal-based material particles in a top-down method of milling a large metal-based material.

The metal-based material nanoparticle may be a pulverized metal-based material nanoparticle.

The metal-based material nanoparticle may have a particle size D50 of 30 to 200 nm. Specifically, when the metal-based material nanoparticle is a pulverized metal-based material nanoparticle, D50 based on a long aspect may be 30 to 200 nm, specifically 85 to 130 nm. Additionally, the aspect ratio of the pulverized metal-based material nanoparticle may be greater than 1.5 by 90 wt% or more based on the entire weight of the pulverized metal-based material nanoparticle. That is, the pulverized metal-based material nanoparticle may be acicular (needle-like shape). If the particle size D50 of the metal-based material nanoparticle exceeds 200 nm, cycle-life deterioration due to volume expansion may be caused during charging and discharging of the lithium secondary battery.

By including flaky graphite, which is a conductive material, it gives a surface contact function that maintains the conductivity of the cluster where nanoparticles in the composite are gathered. Due to this, it is possible to improve the electrochemical reversibility and conductivity inside the negative active material.

The particle size D50 of the conductive material can be 3 to 12 $\mu$m. Specifically, it may be 6 to 11 $\mu$m. If the particle size D50 is less than 3 $\mu$m, there may be an inferiority in conductive and expansion, and if it exceeds 12 $\mu$m, it is difficult to mix in the composite.

A negative active material according to another aspect of the present invention is a negative active material for lithium secondary battery, comprising:

a carbon-based matrix; and a composite comprising a metal-based material nanoparticle supported in the carbon-based matrix, wherein, a conductive material and a conductive additive are further comprised in the composite; the conductive material is flaky graphite; the conductive additive is a carbon nanotube; and a content of the carbon nanotube is 0.2 to 2.3 wt% compared to the metal-based material nanoparticle in the composite.

The negative active material may be a negative active material manufactured by the manufacturing method described.

The carbonized metal-carbon composite may be one in which metal-based material nanoparticles, conductive material, and conductive additives are uniformly dispersed in a carbon-based matrix. The carbon-based matrix included in the carbonized metal-carbon-based composite may be derived from an amorphous carbon-based precursor material in a manufacturing method. Specifically, the carbon-based matrix may be a carbonized material of an amorphous carbon-based precursor.

The specific details of each carbon-based matrix, metal-based material nanoparticle, conductive material, and conductive additive constituting the negative active material are the same as the description in the manufacturing method described above, and are omitted here. Particularly metal-based material nanoparticle, conductive additive and conductive material do not change material characteristics such as mixing ratio, size, and aspect ratio even if they go through the carbonization step.

The obtained negative active material can be usefully used for the negative electrode of a lithium secondary battery. That is, a lithium secondary battery according to an exemplary embodiment includes a negative electrode and an electrolyte including the above-described negative active material together with a positive electrode.

A lithium secondary battery according to an exemplary embodiment may include an electrode assembly including a positive electrode, a negative electrode, and a separator disposed between the positive electrode and the negative electrode. This electrode assembly constitutes a lithium secondary battery by being wound or folded and accommodated in a case.

At this time, the case may have a shape such as a cylindrical shape, a prismatic shape, or a thin film shape, and may be appropriately deformed according to the type of device to be applied.

The negative electrode may be manufactured by mixing the negative electrode active material, a binder, and optionally a conductive material with each other to prepare a composition for forming a negative electrode active material layer, and then applying the composition to a negative electrode current collector.

The negative electrode current collector may be, for example, copper foil, nickel foil, stainless steel foil, titanium foil, nickel foam, copper foam, a polymer substrate coated with a conductive metal, or a combination thereof.

Examples of the binder may include polyvinyl alcohol, carboxymethylcellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, polypropylene, or the like, but are not limited thereto. The binder may be mixed in an amount of 1 to 30 wt% based on the total amount of the composition for forming a negative electrode active material layer.

The conductive material is not particularly limited as long as it has conductivity without causing a chemical change in a battery, and specifically, graphite such as natural graphite and artificial graphite; carbon black such as acetylene black, Ketjen black, channel black, furnace black, lamp black, and summer black; a conductive fiber such as a carbon fiber and a metal fiber; metal powders such as carbon fluoride, aluminum, and nickel powders; conductive whiskeys such as zinc oxide and potassium titanate; a conductive metal oxide such as titanium oxide; a conductive material such as a polyphenylene derivative, or the like, may be used as the conductive material. The conductive material may be mixed in an amount of 0.1 to 30 wt% based on the total amount of the composition for forming a negative electrode active material layer.

Next, the positive electrode may be manufactured by mixing a positive electrode active material, a binder, and optionally a conductive material with each other to prepare a composition for forming a positive electrode active material layer, and then applying the composition to a positive electrode current collector. In this case, the binder and the conductive material are used in the same manner as in the case of the negative electrode.

As the positive current collector, for example, stainless steel, aluminum, nickel, titanium, fired carbon, or aluminum or stainless steel surface-treated with carbon, nickel, titanium, silver, or the like, may be used.

As the positive electrode active material, a compound (lithiated intercalation compound) capable of reversible intercalation and deintercalation of lithium may be used.

As the positive electrode active material, specifically one or more of composite oxides of metals such as cobalt, manganese, nickel, or a combination thereof and lithium, as a specific example, a compound represented by any one of the following formulas may be used. $Li_aA_{1-b}R_bD_2$ (where $0.90 \leq a \leq 1.8$ and $0 \leq b \leq 0.5$); $Li_aE_{1-b}R_bO_{2-c}D_c$ (where $0.90 \leq a \leq 1.8$, $0 \leq b \leq 0.5$, and $0 \leq c \leq 0.05$); $LiE_{2-b}R_bO_{4-c}D_c$ (where $0 \leq b \leq 0.5$ and $0 \leq c \leq 0.05$); $Li_aNi_{1-b-c}Co_bR_cD_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bR_cO_{2-\alpha}Z_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bR_cO_{2-\alpha}Z_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bR_cD_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bR_cO_{2-\alpha}Z_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bR_cO_{2-\alpha}Z_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_5$; $LiTO_2$; $LiNiVO_4$; $Li_{(3-f)}J_2 PO_{43}$ ($0 \leq f \leq 2$); $Li_{(3-f)}Fe_2 PO_{43}$ ($0 \leq f \leq 2$); and $LiFePO_4$.

In the above formula, A is Ni, Co, Mn, or a combination thereof; R is Al, Ni, Co, Mn, Cr, Fe, Mg, Sr, V, a rare earth element, or a combination thereof; D is O, F, S, P, or combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

Non-aqueous electrolytes or known solid electrolytes can be used as electrolytes filled in the lithium secondary battery, and lithium salts dissolved in them can be used.

The lithium salt may use, for example, at least one selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, LiCl, and LiI. there is.

As the solvent of the non-aqueous electrolyte, for example, cyclic carbonates such as ethylene carbonate, propylene carbonate, butylene carbonate, and vinylene carbonate; chain carbonates, such as dimethyl carbonate, methyl ethyl carbonate, and diethyl carbonate; esters such as methyl acetate, ethyl acetate, propyl acetate, methyl propionate, ethyl propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; amides such as dimethylformamide may be used, but is not limited thereto. These may be used alone or in combination of a plurality of them. Particularly, a mixed solvent of cyclic carbonate and chain carbonate can be preferably used.

Also, as an electrolyte, a gel polymer electrolyte impregnated with an electrolyte solution in a polymer electrolyte such as polyethylene oxide or polyacrylonitrile, or an inorganic solid electrolyte such as LiI or $Li_3N$ is possible.

The separator is made of chemically resistant and hydrophobic olefin-based polymers such as polypropylene; a sheet or non-woven fabric made of glass fiber, polyethylene, etc. may be used. When a solid electrolyte solution such as a polymer is used as the electrolyte solution, the solid electrolyte solution may also serve as a separator.

Hereinafter, an exemplary embodiment will be described in detail so that a person of an ordinary skill can easily practice it in the technical field to which the present invention belongs. However, the present invention may be embodied in many different forms, and is not limited to the exemplary embodiment described herein.


**Manufacture of negative active material and half cell**


**(1) Manufacture of negative active material**

Pitch was used as the carbon-based matrix, pulverized silicon nanoparticles were used as the metal-based material nanoparticle, and flaky graphite was used as the conductive material.

The pitch used had 70 to 80 wt% of fixed carbon and a softening point of 240 to 260 °C.

The pulverized silicon nanoparticles used were needle-like shape with a D50 of 100 to 125 nm and an aspect ratio of more than 1.5 for 90 wt% or more of the entire weight.

The flaky graphite used had a D50 of 7 to 9 μm.

45 to 60 parts by weight of pulverized silicon nanoparticles and 20 to 30 parts by weight of flaky graphite were mixed with respect to 100 parts by weight of the composite. Here, carbon nanotubes were further added and mixed in the contents shown in Table 1 below. Thereafter, amorphous carbon was composited with the remainder to obtain a composite, which was carbonized in an inert atmosphere at a temperature of 900 °C for 1 hour to obtain a negative active material.

(2) Manufacture of lithium secondary battery (Half-cell)

After preparing the negative active material of the (1), binder (SBR-CMC) and conductive material (Super P) is prepared by the weight ratio of negative active material: binder: conductive material is 75 : 24 : 1, and then put them into distilled water and mix them uniformly to preparing a slurry.

After uniformly applying the above slurry to a copper (Cu) current collector, it was pressed in a roll press and dried to prepare a negative electrode. Specifically, the loading amount was 5 mg/cm$^2$ and the electrode density was 1.2 to 1.3g/cc.

Lithium metal is used as the counter electrode, and a solution which including ethylene carbonate (EC): dimethyl carbonate (DMC) volume ratio (3:7), and dissolved $LiPF_6$.

A CR 2032 half coin cell was fabricated according to a conventional manufacturing method using the negative electrode, lithium metal and electrolyte solution.

**Electrochemical characteristic measurement**

**(1) Initial efficiency measurement**

The negative active material prepared with the composition shown in Table 1 below was applied to each half cell and tested.

Specifically, the battery was driven under the conditions of 0.1 C, 0.005V, 0.05C cut-off charging and 0.1 C, 1.5V cut-off discharge, and the initial efficiency was measured and listed in Table 1 below.

**(2) 50th cycle-life**

The cycle-life was measured by manufacturing half-cells.

Specifically, after measuring the initial efficiency, the long-term cycle-life was measured through 50 charge and discharge under 0.5C (0.005V, 0.05C cut off charge)/0.5C (1.5V cut-off discharge) condition. The results are listed in Table 1. The loading amount of the electrode was 5mg/cm$^2$ and the electrode density was 1.2 to 1.3g/cc, and the electrolyte solution for the long-term cycle-life test was EC: EMC = 3:7 (1.0M $LiPF_6$).

**(3) Expansion rate**

The expansion rate was calculated by the following formula and the result was listed in Table 1.

$$\text{Expansion rate (\%)} = \frac{((\text{thickness of electrode after 50th cycle} - \text{thickness of Cu current collector}) - (\text{thickness of fresh electrode} - \text{thickness of Cu current collector}))}{(\text{thickness of fresh electrode} - \text{thickness of Cu current collector})} * 100 \ (\%)$$

(Table 1)

| Example | conductive additive | Carbon nanotube content compared to pulverized silicon nanoparticles in the composite | BET of complex | electrochemical evaluation | | | |
|---|---|---|---|---|---|---|---|
| | | | | Capacity | Initial efficiency | 50th cycle-life | ratio of 50th expansion |
| | | wt% | m2/g | More than 1400mAh/g | More than 85% | More than 70% | More than 55% |
| exemplary embodiment 1 | Carbon nanotube | 0.50 | 4.06 | 1440.0 | 89.2 | 87.8 | 43.2 |
| exemplary embodiment 2 | Carbon nanotube | 100 | 4.32 | 1425.0 | 88.7 | 83.5 | 48.3 |
| exemplary embodiment 3 | Carbon nanotube | 150 | 4.61 | 1413.0 | 87.6 | 77.2 | 49.8 |
| exemplary embodiment 4 | Carbon nanotube | 200 | 4.86 | 1412.0 | 86.2 | 71.8 | 52.1 |
| Comparative Example 1 | Carbon nanotube | 2.50 | 5.85 | 1370.0 | 83.9 | 49.3 | 78.2 |
| Comparative Example 2 | Carbon nanotube | 0.00 | 6.21 | 1385.0 | 84.2 | 57.9 | 69.4 |

As can be seen from the Table 1, in the case of Comparative Example 1 and 2, in which carbon nanotubes, which are conductive additives, were not added, or in which the content of carbon nanotubes was added in excess of 2.3 wt% compared to the pulverized silicon nanoparticles in the composite, it can be seen that the initial capacity, initial efficiency characteristic, long-term cycle-life characteristic and expansion rate characteristic are all inferior compared to exemplary embodiments 1 to 4 in which the content of nanotubes is added carbon nanotubes in the range of 0.2 to 2.3 wt% compared to the pulverized silicon nanoparticle in the composite.

The present invention is not limited to the exemplary embodiment, but can be manufactured in a variety of different forms, and in the technical field to which the present invention belongs, a person of an ordinary skill does not change the technical idea or essential features of the present invention. It will be appreciated that it may be embodied in specific forms. Therefore, the exemplary embodiment described above should be understood as illustrative in all respects and not limiting.

**Claims**

1. A negative active material for lithium secondary battery, comprising:

   a carbon-based matrix; and a composite comprising a metal-based material nanoparticle supported in the carbon-based matrix,
   wherein, a conductive material and a conductive additive are further comprised in the composite;
   the conductive material is flaky graphite;
   the conductive additive is a carbon nanotube; and
   a content of the carbon nanotube is 0.2 to 2.3 wt% compared to the metal-based material nanoparticle in the composite.

2. The negative active material of claim 1, wherein:
   the metal-based material nanoparticle is derived from one selected from the group consisting of silicon, tin and aluminum.

3. The negative active material of claim 1, wherein:
   the metal-based material nanoparticle is a pulverized metal-based material nanoparticle.

4. The negative active material of claim 3, wherein:
   the pulverized metal-based material nanoparticle has a particle size D50 of 30 to 200 nm, and an aspect ratio of 90 wt% or more of the entire weight of the pulverized metal-based material nanoparticle is greater than 1.5.

5. The negative active material of claim 1, wherein:
   the particle size D50 of the conductive material is 3 to 12μm.

6. A negative active material manufacturing method for lithium secondary battery, comprising:

   grinding the metal-based material into metal-based material nanoparticles through a grinding process;
   obtaining spherical particles by spheronizing the pulverized metal-based material nanoparticle, a conductive material, and a conductive additive together;
   obtaining a composite by complexing the spherical particles with an amorphous carbon-based precursor material; and
   carbonizing the composite;
   wherein the conductive material is flaky graphite,
   the conductive additive is a carbon nanotube;
   a content of the carbon nanotube is 0.2 to 2.3 wt% compared to the metal-based material nanoparticle in the composite.

7. The method of claim 6, wherein:
   the step of obtaining a complex is a step of mixing and binding the spherical particles and the amorphous carbon-based precursor material by dry method or wet method.

8. The method of claim 6, wherein:
   the amorphous carbon-based precursor material includes one selected from the group consisting of coal-based pitch, petroleum-based pitch and a combination thereof.

9. The method of claim 6, wherein:
   the amorphous carbon-based precursor material has 50 to 85 wt% fixed carbon and a softening point less than 300°C.

10. The method of claim 6, wherein:
    the metal-based material is one selected from the group consisting of silicon, tin and aluminum.

11. The method of claim 6, wherein:
    the metal-based material nanoparticle is a pulverized metal-based material nanoparticle.

12. The method of claim 11, wherein:
    the pulverized metal-based material nanoparticle has a particle size D50 of 30 to 200 nm, and an aspect ratio of 90 wt% or more of the entire weight of the pulverized metal-based material nanoparticle is greater than 1.5.

13. The method of claim 6, wherein:
    the particle size D50 of the conductive material is 3 to 12μm.

14. The method of claim 6, wherein:
    the step of carbonizing the composite is a step of carbonizing for 0.5 to 2 hours at a temperature of 800 to 1000 °C.

15. A lithium secondary battery comprising:

    a positive electrode;
    a negative electrode; and
    electrolyte;
    wherein, the negative electrode is any one of claims 1 to 5.

【FIG. 1】

【FIG. 2】

## INTERNATIONAL SEARCH REPORT

| International application No. |
| --- |
| **PCT/KR2021/019339** |

| A. | CLASSIFICATION OF SUBJECT MATTER |
| --- | --- |

**H01M 4/36**(2006.01)i; **H01M 4/587**(2010.01)i; **H01M 4/62**(2006.01)i; **H01M 4/38**(2006.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 32/05(2017.01); C01B 32/21(2017.01); H01M 10/0525(2010.01); H01M 4/134(2010.01); H01M 4/1393(2010.01); H01M 4/38(2006.01); H01M 4/48(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소계 매트릭스(carbon-based matrix), 실리콘 나노 입자(silicon nanoparticle), 인편상 흑연(flake graphite), 탄소 나노 튜브(carbon nanotube), 음극 활물질(negative electrode active material), 복합체 (composite), 리튬 이차전지(lithium secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2016-0002281 A (GLBE CO., LTD.) 07 January 2016 (2016-01-07) See claims 1 and 4; paragraphs [0011], [0017] and [0040]-[0044]; and figure 2. | 1-15 |
| A | KR 10-2014-0085822 A (POSCO et al.) 08 July 2014 (2014-07-08) See entire document. | 1-15 |
| A | JP 6263823 B2 (LG CHEMICAL LTD.) 24 January 2018 (2018-01-24) See entire document. | 1-15 |
| A | US 2020-0354222 A1 (EOCELL LIMITED) 12 November 2020 (2020-11-12) See entire document. | 1-15 |
| A | US 10629895 B2 (WACKER CHEMIE AG) 21 April 2020 (2020-04-21) See entire document. | 1-15 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 March 2022** | **24 March 2022** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/019339** |

### C.    DOCUMENTS CONSIDERED TO BE RELEVANT

| Category* | Citation of document, with indication, where appropriate, of the relevant passages | Relevant to claim No. |
| --- | --- | --- |
| PX | KR 10-2194750 B1 (GRAPSIL CO., LTD.) 23 December 2020 (2020-12-23)<br>See claims 1, 3-7, 13, 14 and 19; and paragraphs [0059], [0060], [0064], [0065], [0109] and [0110]. | 1,2,5,15 |

Form PCT/ISA/210 (second sheet) (July 2019)

## INTERNATIONAL SEARCH REPORT
### Information on patent family members

International application No.

**PCT/KR2021/019339**

| Patent document cited in search report | | | Publication date (day/month/year) | Patent family member(s) | | | Publication date (day/month/year) |
|---|---|---|---|---|---|---|---|
| KR | 10-2016-0002281 | A | 07 January 2016 | KR | 10-1718367 | B1 | 21 March 2017 |
| KR | 10-2014-0085822 | A | 08 July 2014 | KR | 10-1461220 | B1 | 13 November 2014 |
| JP | 6263823 | B2 | 24 January 2018 | CN | 103959516 | A | 30 July 2014 |
| | | | | CN | 108321377 | A | 24 July 2018 |
| | | | | EP | 2763215 | A1 | 06 August 2014 |
| | | | | EP | 2763215 | B1 | 26 September 2018 |
| | | | | JP | 2015-502025 | A | 19 January 2015 |
| | | | | KR | 10-1637068 | B1 | 06 July 2016 |
| | | | | KR | 10-2014-0070406 | A | 10 June 2014 |
| | | | | PL | 2763215 | T3 | 30 April 2019 |
| | | | | US | 10290860 | B2 | 14 May 2019 |
| | | | | US | 2014-0154576 | A1 | 05 June 2014 |
| | | | | US | 2017-0133663 | A1 | 11 May 2017 |
| | | | | US | 9590238 | B2 | 07 March 2017 |
| | | | | WO | 2014-084610 | A1 | 05 June 2014 |
| US | 2020-0354222 | A1 | 12 November 2020 | CN | 113924668 | A | 11 January 2022 |
| | | | | KR | 10-2021-0153152 | A | 16 December 2021 |
| | | | | WO | 2020-227479 | A1 | 12 November 2020 |
| US | 10629895 | B2 | 21 April 2020 | CN | 105981206 | A | 28 September 2016 |
| | | | | CN | 105981206 | B | 06 August 2019 |
| | | | | DE | 102014202156 | A1 | 06 August 2015 |
| | | | | EP | 3103149 | A1 | 14 December 2016 |
| | | | | EP | 3103149 | B1 | 18 April 2018 |
| | | | | JP | 2017-506413 | A | 02 March 2017 |
| | | | | JP | 6794260 | B2 | 02 December 2020 |
| | | | | KR | 10-1923092 | B1 | 27 February 2019 |
| | | | | KR | 10-2016-0104720 | A | 05 September 2016 |
| | | | | US | 2016-0365567 | A1 | 15 December 2016 |
| | | | | WO | 2015-117838 | A1 | 13 August 2015 |
| KR | 10-2194750 | B1 | 23 December 2020 | None | | | |

Form PCT/ISA/210 (patent family annex) (July 2019)